# EUROPÄISCHE PATENTSCHRIFT

(11) **EP 2 690 327 B1**
(45) Veröffentlichungstag und Bekanntmachung des Hinweises auf die Patenterteilung: **16.09.2015**
(21) Anmeldenummer: 13002664.4
(22) Anmeldetag: 22.05.2013
(51) Int. Cl.: F16K 11/044, E05F 3/22

(54) **Hydraulisches Wegeventil**
Hydraulic directional valve
Distributeur hydraulique

(30) Priorität: 24.07.2012 DE 102012106684
(43) Veröffentlichungstag der Anmeldung: 29.01.2014
(73) Patentinhaber: DORMA Deutschland GmbH, 58256 Ennepetal (DE)
(72) Erfinder: Bienek, Volker, D-44143 Dortmund (DE); Wulbrandt, Tim, D-58332 Schwelm (DE); Wildförster, Thomas, D-58332 Schwelm (DE)
(74) Vertreter: Balder IP Law, S.L.

(56) Entgegenhaltungen:
- WO-A1-2011/120546
- US-A- 3 926 218
- US-A1- 2005 150 553

## Beschreibung

Vorliegende Erfindung betrifft ein hydraulisches Wegeventil, insbesondere ein 3/2-Wegeventil mit einem Kugelsitz und einem Kegelsitz. Die Erfindung betrifft ferner einen Türbetätiger zum Bewegen eines Türflügels, umfassend das hydraulische Wegeventil.

3/2-Wegeventile weisen drei Fluidanschlüsse und zwei Schaltstellungen auf. Meist werden Wegeventile als Schieberventile ausgeführt. Dabei ist ein absolut dichter Sitz nicht unbedingt notwendig, da eine Pumpe nachfördert. Das Verhältnis zu Arbeitsvolumenstrom und Leckage ist dabei unerheblich. Bei Türbetätigern jedoch werden Sitzventile ausgeführt, da das Verhältnis von Arbeitsvolumenstrom und Leckage optimal, bzw. sehr dicht sein muss. Im Ventil wird zum Teil ein Ventilstößel zum Öffnen und Schließen der Dichtsitze verwendet. Der Ventilstößel wird über einen Elektromagneten, einen Steuerdruck oder ein mechanisches Stellglied bewegt. Des Weiteren kennt der Stand der Technik verschiedene Türbetätiger, insbesondere Türschließer, Servotürschließer und Türantriebe. Viele Türbetätiger weisen eine Speicherfeder, insbesondere eine Schließerfeder, auf. In der komprimierten Speicherfeder wird die Energie zum Bewegen des Türflügels, beispielsweise für einen Notfall, gespeichert. Dabei ist die Speicherfeder über mehrere Tage oder Monate komprimiert und durch einen hydraulischen Sperrraum blockiert. Im Notfall kann ein Bewegen der Türe vonnöten sein. In diesem Fall wird der Hydraulikdruck aus dem Sperrraum abgelassen, so dass sich die Speicherfeder entspannen kann. Beim Entspannen wirkt die Speicherfeder auf eine Antriebseinheit im Türbetätiger und somit über die Abtriebswelle auf den Türflügel. Das verwendete Hydraulikventil muss sicherstellen, dass der Druck im Sperrraum über eine sehr lange Zeit leckagefrei gehalten wird. Im Notfall muss ein sicheres Öffnen des Ventils und ein Einschalten der hydraulischen Dämpfung gewährleistet werden.

In der WO 2011/120546 A1 ist ein hydraulisches Wegeventil gemäß dem Oberbegriff vom Anspruch 1 offenbart.

Es ist Aufgabe vorliegender Erfindung, ein hydraulisches Wegeventil bereitzustellen, das bei kostengünstiger Herstellung und bei wartungsarmem Betrieb ein möglichst leckagefreies Abdichten einer ersten Leitung und ein zuverlässiges Öffnen dieser ersten Leitung ermöglicht. Des Weiteren ist es Aufgabe vorliegender Erfindung, einen Türbetätiger mit dem hydraulischen Wegeventil bereitzustellen.

Die Lösung der Aufgabe erfolgt durch die Merkmale des unabhängigen Anspruchs . Die abhängigen Ansprüche haben bevorzugte Weiterbildungen der Erfindung zum Gegenstand.

Somit wird die Erfindung gelöst durch ein hydraulisches Wegeventil, umfassend ein Ventilgehäuse und eine in das Ventilgehäuse integrierte Ventilkammer. Die Ventilkammer weist eine erste Ventilsitzbohrung als Verbindung zu einer ersten Leitung P, eine zweite Ventilsitzbohrung als Verbindung zu einer zweiten Leitung A und eine freie Öffnung zu einer dritten Leitung T auf. Die erste Leitung P wird beispielsweise mit dem Sperrraum für eine Speicherfeder in einem Türbetätiger verbunden. Die zweite Leitung A dient beispielsweise der Dämpfung einer Schließbewegung des Türbetätigers und die dritte Leitung T ist üblicherweise die Tankleitung. Mit dem erfindungsgemäßen Wegeventil muss nun die erste Leitung P dauerhaft leckagefrei abgesperrt werden. Hierzu umfasst das Wegeventil einen Betätigungsmechanismus und einen durch den Betätigungsmechanismus bewegbaren und teilweise in der Ventilkammer angeordneten Ventilstößel. Der Ventilstößel weist innerhalb der Ventilkammer eine der ersten Ventilsitzbohrung zugewandte konvexe Oberfläche als erste Dichtfläche und eine der zweiten Ventilsitzbohrung zugewandte Kegelfläche als zweite Dichtfläche auf. Je nach Stellung des Ventilstößels ist wahlweise die erste Ventilsitzbohrung durch die erste Dichtfläche oder die zweite Ventilsitzbohrung durch die zweite Dichtfläche verschlossen.

Der Betätigungsmechanismus, beispielsweise ein Elektromagnet, ist so ausgebildet, dass er mit möglichst wenig Energieaufnahme den Ventilstößel bzw. die erste Dichtfläche auf die erste Ventilsitzbohrung drückt und somit die erste Leitung P über einen langen Zeitraum leckagefrei schließt. Trotzdem muss sichergestellt werden, dass bei Bedarf der Ventilstößel in Schließrichtung der zweiten Ventilsitzbohrung bewegt werden kann, so dass die zweite Dichtfläche auf der zweiten Ventilsitzbohrung zur Anlage kommt. Um dies zu gewährleisten, ist die Ventilkammer unterteilt in eine Staukammer und in eine Hauptkammer. Durch Ausgestaltung der Außenkontur des Ventilstößels und durch Ausgestaltung der Innenkontur der Ventilkammer erfolgt diese Unterteilung in Staukammer und Hauptkammer. Die Staukammer ist dabei der ersten Ventilsitzbohrung zugewandt und befindet sich somit zwischen der ersten Ventilsitzbohrung und dem Ventilstößel. Die engste Stelle der ersten Ventilsitzbohrung wird als eine erste Strömungsquerschnittsfläche in der ersten Ventilsitzbohrung bezeichnet. Diese erste Strömungsquerschnittsfläche in der ersten Ventilsitzbohrung ist größer als eine weitere Strömungsquerschnittsfläche nach einem minimalen Abheben der ersten Dichtfläche von der ersten Ventilsitzbohrung. Diese weitere Strömungsquerschnittsfläche ist definiert durch die Strömung von der Staukammer in die Hauptkammer oder direkt von der Staukammer in die dritte Leitung T. Der erste Strömungsquerschnitt in Form einer Bohrung ist zumindest nach der Öffnung des Stößels größer als die weitere Strömungsquerschnittsfläche in Form eines Ringspaltes. Damit kommt es zur Stauung, weshalb sich Druck aufbaut. Dieser Druck wirkt sich auf die größere Fläche aus (Stirnseitenfläche des Stößels). Damit wird genügend Rückstellkraft erzeugt, die erstens die Rückstellfeder unterstützt und weiterhin die Trägheiten und Reibungen bei der Stößelbewegung souverän überwindet. Erfindungsgemäß ist also vorgesehen, dass sich bei einem minimalen Abheben der ersten Dichtfläche von der ersten Ventilsitzbohrung zunächst die Staukammer mit druckbeaufschlagtem Fluid aus der ersten Leitung P füllt. Da die weitere Strömungsquerschnittsfläche äußerst klein oder annähernd Null ist, baut sich auf der der ersten Ventilsitzbohrung zugewandten Seite des Ventilstößels ein Druck auf. Dieser Druck bewegt den Ventilstößel in Schließrichtung der zweiten Ventilsitzbohrung.

In bevorzugter Ausführung kann die Staukammer durch einen Absatz an der Außenkontur des Ventilstößels und/oder durch einen Absatz an der Innenkontur der Ventilkammer gebildet werden. Die Ventilkammer und/ oder der Ventilstößel sind rotationssymmetrisch ausgebildet, so dass die weitere Strömungsquerschnittsfläche insbesondere eine Ringfläche ist. Der Stößel bewegt sich nach dem minimalen Abheben der ersten Dichtfläche von der ersten Ventilsitzbohrung weiter in Schließrichtung der zweiten Ventilsitzbohrung. Entscheidend ist, dass die weitere Strömungsquerschnittsfläche nur in der geschlossenen Stellung der ersten Ventilsitzbohrung und bei dem minimalen Abheben extrem klein ist. Bei einer weitergehenden Bewegung des Stößels wird die weitere Strömungsquerschnittsfläche größer, z.B. durch Überfahren von Steuerkanten bzw. Freifahren der Tankbohrung, so dass ein ausreichend großer Strömungsquerschnitt für den Fluidfluss von der ersten Leitung P über die Ventilkammer in die dritte Leitung T möglich ist. Spätestes dann, wenn die zweite Dichtfläche auf der zweiten Ventilsitzbohrung aufliegt, ist die weitere Strömungsquerschnittsfläche zumindest so groß wie die erste Strömungsquerschnittsfläche in der ersten Ventilsitzbohrung.

Bevorzugt ist an dem Ventilstößel eine Scheibe ausgebildet. Diese Scheibe kann integral mit dem Ventilstößel gefertigt werden oder auf dem Ventilstößel montiert werden. Die Außenkontur der Scheibe liegt voll umfänglich an der Innenkontur der Ventilkammer an. Dadurch entsteht die Unterteilung der Ventilkammer in die Staukammer und in die Hauptkammer. Dieses voll umfängliche Anliegen der Scheibe an der Innenkontur der Ventilkammer ist im geschlossenen Zustand der ersten Ventilsitzbohrung und bei dem minimalen Abheben gegeben. Bei der weitergehenden Bewegung des Ventilstößels in Richtung Schließung der zweiten Ventilsitzbohrung liegt die Scheibe nicht mehr voll umfänglich an der Innenkontur der Ventilkammer an. Insbesondere wird hierbei die freie Öffnung zur dritten Leitung T überfahren, so dass ein ungehinderter Fluidfluss zwischen erster Leitung P und dritter Leitung T über die Ventilkammer möglich ist.

In besonders bevorzugter Ausführung ist das voll umfängliche Anliegen der Scheibe an der Innenkontur der Ventilkammer fluiddicht ausgeführt. Hierzu umfasst die Scheibe eine Dichtung oder die Scheibe ist selbst als Dichtung ausgebildet.

Bevorzugt ist eine Rückstellfeder zum Bewegen des Ventilstößels in Schließrichtung der zweiten Ventilsitzbohrung vorgesehen. Der Betätigungsmechanismus ist dabei so ausgebildet, dass er den Ventilstößel in Schließrichtung der ersten Ventilsitzbohrung bewegt.

Der Betätigungsmechanismus ist insbesondere als Elektromagnet ausgebildet. Vorteilhafterweise erstreckt sich der Ventilstößel aus der Ventilkammer hinaus durch die zweite Ventilsitzbohrung hindurch zum Betätigungsmechanismus. In besonders bevorzugter Ausführung ist der Betätigungsmechanismus so ausgebildet, dass er im bestromten Zustand die erste Dichtfläche auf die erste Ventilsitzbohrung drückt. Sobald der Strom abgeschaltet wird, kann der Stößel in Schließrichtung der zweiten Ventilsitzbohrung bewegt werden. Dies geschieht in erster Linie durch einen ausreichenden Druck in der ersten Leitung P. Sobald das minimale Abheben der ersten Dichtfläche von der ersten Ventilsitzbohrung erfolgt, füllt sich die Staukammer mit druck- oder energiebeaufschlagtem Fluid aus der ersten Leitung P. Da durch den ersten Strömungsquerschnitt in der ersten Ventilsitzbohrung mehr Fluid strömt als durch die weitere Strömungsquerschnittsfläche, baut sich ein Druck in der Staukammer auf. Dieser Druck in der Staukammer ist dabei höher als der Druck in der Hauptkammer, so dass es zu einer Bewegung des Ventilstößels in Schließrichtung der zweiten Ventilsitzbohrung kommt. Bevorzugt wird diese Bewegung des Ventilstößels in Richtung der zweiten Ventilsitzbohrung durch die Rückstellfeder unterstützt.

Die konvexe Oberfläche der ersten Dichtfläche ist bevorzugt durch eine Kugel gebildet. Die Kugel ist in den restlichen Bestandteil des Ventilstößels eingesetzt. Insbesondere durch Verwendung der Kugel ist ein leckagefreies Abdichten der ersten Ventilsitzbohrung möglich.

Die zweite Dichtfläche ist besonders bevorzugt als Kegelringfläche ausgebildet.

Die Erfindung umfasst des Weiteren einen Türbetätiger zum Bewegen eines Türflügels. Der Türbetätiger ist vorzugsweise als Türschließer, Servotürschließer oder Türantrieb ausgebildet. Der Türbetätiger umfasst ein Gehäuse und eine im Gehäuse angeordnete Antriebseinheit mit einer Abtriebswelle. Die Abtriebswelle wird mit dem Türflügel verbunden. Insbesondere erfolgt eine Verbindung zwischen Abtriebswelle und Türflügel über einen Hebel oder ein Gestänge. In bevorzugter Ausführung dient die Abtriebseinheit zur Umsetzung der rotatorischen Bewegung der Abtriebswelle in eine Linearbewegung. In dem Gehäuse ist eine Speicherfeder angeordnet. Diese Speicherfeder wirkt auf die Antriebseinheit. Die Speicherfeder dient zum Speichern einer Schließ- oder Öffnungsenergie für den Türflügel.

Des Weiteren ist im Gehäuse ein hydraulischer Sperrraum ausgebildet. Der Sperrraum dient zum Blockieren der kontrahierten Speicherfeder. Ferner ist im Gehäuse ein hydraulischer Dämpfungsraum zum Dämpfen der Bewegung der Antriebseinheit ausgebildet. Insbesondere wirkt die Speicherfeder auf eine Seite der Antriebseinheit und der Dämpfungsraum ist auf der anderen Seite der Antriebseinheit ausgebildet. Der erfindungsgemäße Türbetätiger umfasst des Weiteren eines der soeben beschriebenen hydraulischen Wegeventile, insbesondere ausgebildet als hydraulisches 3/2-Magnetwegeventil. Die erste Leitung P ist mit dem Sperrraum verbunden. Die zweite Leitung A ist mit dem Dämpfungsraum verbunden. Bevorzugt ist die dritte Leitung T mit einem Tankvolumen innerhalb des Türbetätigers verbunden.

Bei geöffnetem Türflügel ist die Speicherfeder kontrahiert und wird über den hydraulischen Sperrraum blockiert. Dadurch ist der Türflügel in seiner Offenstellung festgesetzt oder kann über eine Freilaufanordnung manuell in Schließrichtung bewegt werden. Entscheidend ist, dass über den Sperrraum die Speicherfeder kontrahiert bleibt und somit die Energie der Speicherfeder zum sicheren Schließen der Türe im Notfall zur Verfügung steht. Der Sperrraum ist über die erste Leitung P mit der ersten ventilsitzbohrung verbunden. Im Regelfall ist der Betätigungs-mechanismus bestromt und drückt somit den Ventilstößel bzw. die erste Dichtfläche gegen die erste Ventilsitzbohrung. Zum Entspannen der Speicherfeder wird der Betätigungsmechanismus stromlos geschalten, so dass über die Rückstellfeder und Druck im Sperrraum der Ventilstößel in Richtung der zweiten Ventilsitzbohrung bewegt wird. Durch ein Verschließen der zweiten Ventilsitzbohrung durch die zweite Dichtfläche wird die zweite Leitung A verschlossen und ein Dämpfungsmechanismus, beispielsweise ein Drosselventil zwischen dem hydraulischen Dämpfungsraum und dem Tankraum, kann wirken.

Während des abgedichteten Zustands der ersten Leitung ist gleichzeitig die zweite Leitung geöffnet, um einen Druckaufbau in einem weiteren Druckraum zu verhindern. Bei Öffnung der ersten Leitung wird in möglichst kurzem Zeitraum die zweite Leitung sicher und sehr schnell verschlossen, um einen Druckaufbau und damit eine Dämpfungsfunktion in dem weiteren Druckraum zu ermöglichen. Die Staustufe bzw. Staukammer ist dazu da, nach Abschaltung der ersten Stufe die zweite Stufe möglichst gleichzeitig, und vor Allem sicher zu schließen. Eine Fehlfunktion der zweiten Stufe würde eine Dämpfung der Türbewegung verhindern und Verletzungen des Benutzers wären die Folge.

Der Betätigungsmechanismus, insbesondere ausgebildet als Elektromagnet, sollte aufgrund der langen Bestromungszeiträume möglichst mit geringem Stromaufwand funktionieren. Eine sehr geringe Stromaufnahme reduziert dabei auch die Erwärmung des Spulenkörpers des Elektromagneten. Entsprechend der geringen Stromaufnahme des Elektromagneten muss die gesamte Ventilfunktion mit möglichst kleinen Schalt- und Zuhaltekräften auskommen. Aus diesem Grund werden die Strömungsquerschnittsflächen in den Ventilsitzbohrungen extrem klein ausgebildet. Bevorzugt liegt der kleinste Durchmesser in der ersten Ventilsitzbohrung bei maximal 1 mm. Solch kleine Querschnitte können ohne weiteres mit Kugel- oder Kegelventilkörpern auch gegen sehr hohe Drücke mit sehr kleinen Schalt- oder Haltekräften abgedichtet werden.

Dieser Vorteil bringt aber gleichzeitig mit sich, dass nach der Abschaltung der Bestromung am Bewegungsmechanismus nur sehr geringe Rückstellkräfte für den Ventilstößel und den in der Magnetspule erforderlichen Eisenanker zur Verfügung stehen. Bei herkömmlichen Konstruktionen bewirkt die über den Flüssigkeitsdruck der ersten Leitung P nutzbare Kraft auf den Kugelventilkörper nur eine relativ langsame und träge Rückstellung der beweglichen Ventilbauteile.

In der Regel ist es bei einem 3/2-Wegeventil jedoch erforderlich, dass nach einem Öffnen des ersten Ventilsitzes ohne erkennbare Verzögerung der zweite Ventilsitz geschlossen wird. Erfindungsgemäß wird dies dadurch erreicht, dass sich nach einer minimalen Öffnung der ersten Ventilsitzbohrung die Staukammer mit beaufschlagtem Fluid füllt und somit eine äußerst schnelle Bewegung des Ventilstößels zum Schließen der zweiten Ventilsitzbohrung erfolgt.

Nachfolgend werden Ausführungsbeispiele der Erfindung, gezeigt in den Figuren, genauer erläutert. Dabei zeigen:
- Figur 1: ein erfindungsgemäßes hydraulisches Wegeventil gemäß einem ersten Ausführungsbeispiel mit geschlossener erster Leitung P,
- Figur 2: das erfindungsgemäße hydraulische Wegeventil gemäß dem ersten Ausführungsbeispiel mit offener erster Leitung P,
- Figur 3: ein erstes Detail aus Figur 1,
- Figur 4: ein zweites Detail aus Figur 1,
- Figur 5: einen Detailausschnitt des erfindungsgemäßen hydraulischen Wegeventils gemäß einem zweiten Ausführungsbeispiel mit geschlossener erster Leitung P, und
- Figur 6: ein Detail aus Figur 5.

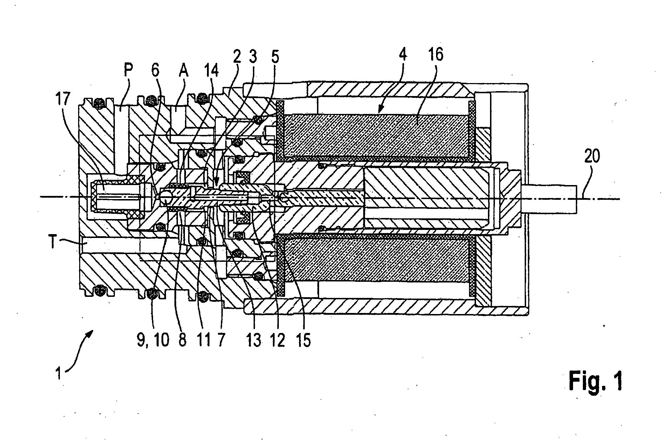

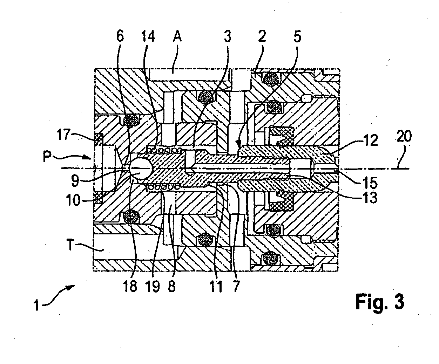

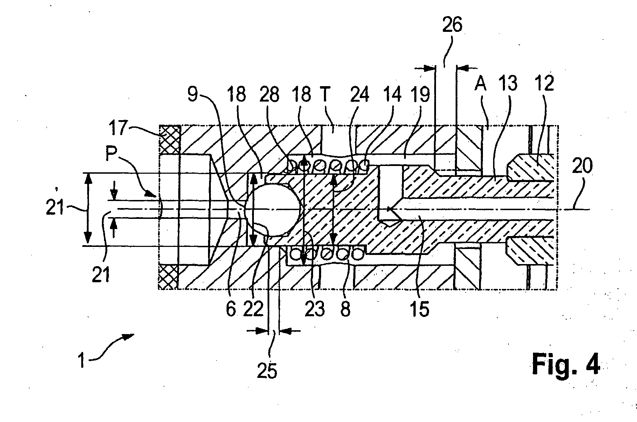

Im Folgenden wird anhand der Figuren 1 bis 4 ein erstes Ausführungsbeispiel des hydraulischen Wegeventils 1, ausgebildet als 3/2-Magnetwegeventil, im Detail erläutert. Die Figuren zeigen jeweils Schnittansichten des hydraulischen Wegeventils 1. Die Figuren 3 und 4 sind vergrößerte Ansichten aus Figur 1.

Das Wegeventil 1 umfasst ein Ventilgehäuse 2 und eine im Ventilgehäuse 2 ausgebildete Ventilkammer 3. Das Ventilgehäuse 2 ist dabei zusammengesetzt aus mehreren ineinander verschraubten und abgedichteten Einsätzen. An dem Ventilgehäuse 2 sind drei Anschlüsse ausgebildet: eine erste Leitung P, eine zweite Leitung A und eine dritte Leitung T. Die erste Leitung P wird auch als Druckleitung bezeichnet. Die zweite Leitung A wird auch als Arbeitsleitung bezeichnet. Die dritte Leitung T führt insbesondere zu einem Tank.

Des Weiteren umfasst das Wegeventil 1 einen Betätigungsmechanismus, ausgebildet als Elektromagnet, und einen Ventilstößel 5. Der Betätigungsmechanismus 4 dient zum Bewegen des Ventilstößels 5. Der Ventilstößel 5 wird dabei entlang einer Längsachse 20 linearbeweglich verschoben.

In der Ventilkammer 3 ist eine erste Ventilsitzbohrung 6 als Verbindung zur ersten Leitung P ausgebildet. Des Weiteren ist eine zweite Ventilsitzbohrung 7 als Verbindung zur zweiten Leitung A ausgebildet. Zwischen der ersten Ventilsitzbohrung 6 und der zweiten Ventilsitzbohrung 7 befindet sich eine freie Öffnung 8 in der Ventilkammer 3 als Verbindung zur dritten Leitung T.

Der Ventilstößel 5 ist teilweise in der Ventilkammer 3 angeordnet. Zur Erleichterung der Montage ist der Ventilstößel 5 zweiteilig ausgebildet und besteht aus einem ersten Teil 12, der in den Betätigungsmechanismus 4 hineinragt und einen zweiten Teil 13, der durch die zweite Ventilsitzbohrung 7 hindurch in die Ventilkammer 3 hineinragt. Die beiden Teile 12, 13 sind fest miteinander verschraubt. Zum Druckausgleich ist ein Verbindungskanal 15 im Ventilstößel 5 vorgesehen.

Bestandteil des Ventilstößels 5 ist eine Kugel 10. Die Kugel 10 stellt eine erste Dichtfläche 9, ausgebildet als konvexe Oberfläche, dar. Diese erste Dichtfläche 9 ist der ersten Ventilsitzbohrung 6 zugewandt. Somit ist durch die erste Ventilsitzbohrung 6 und die erste Dichtfläche 9 ein erster Ventilsitz gebildet. Des Weiteren ist am Ventilstößel 5 eine zweite Dichtfläche 11, ausgebildet als Kegelringfläche, angeordnet. Die zweite Dichtfläche 11 bildet zusammen mit der zweiten Ventilsitzbohrung 7 einen zweiten Ventilsitz.

Der Betätigungsmechanismus 4, ausgebildet als Elektromagnet, umfasst eine Spule 16, die bestromt werden kann und somit den Ventilstößel 5 bewegt. Im bestromten Zustand der Spule 16 ist der Ventilstößel 5 gemäß der Darstellung in Figur 1 nach links gedrückt, so dass die erste Dichtfläche 9 die erste Ventilsitzbohrung 6 abdichtet.

Zur Rückstellung des Ventilstößels 5, also zum Aufdrücken der zweiten Dichtfläche 11 auf die zweite Ventilsitzbohrung 7, ist eine Rückstellfeder 14 in der Ventilkammer 3 angeordnet.

Zwischen der ersten Ventilsitzbohrung 6 und dem Anschluss der ersten Leitung P im Ventilgehäuse 2, befindet sich ein Filter 17.
Figur 1 zeigt die geschlossene Stellung der ersten Ventilsitzbohrung 6.

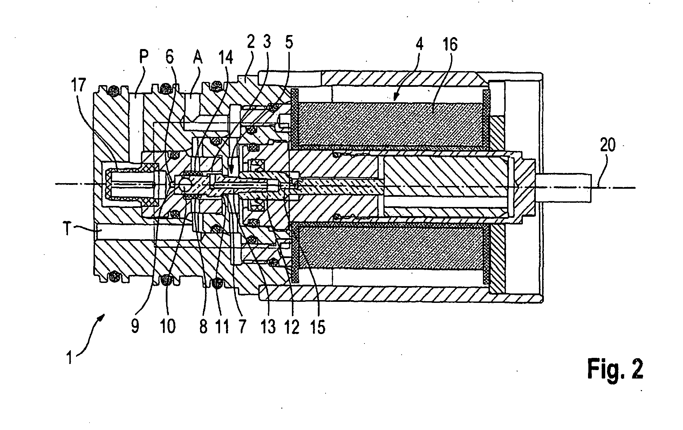

Figur 2 zeigt die offene Stellung der ersten Ventilsitzbohrung 6.

Die Figuren 3 und 4 zeigen vergrößerte Darstellungen aus Figur 1. In Figur 3 ist zu sehen, dass bei der geschlossenen Stellung der ersten Ventilsitzbohrung und bei einem minimalen Abheben der ersten Dichtfläche 9 von der ersten Ventilsitzbohrung 6 die Ventilkammer 3 unterteilt ist in eine Staukammer 18 und in eine Hauptkammer 19. Die Staukammer 18 ist dabei der ersten Ventilsitzbohrung 6 zugewandt.

Figur 4 zeigt einen ersten Durchmesser 21, der die erste Strömungsquerschnittsfläche in der ersten Ventilsitzbohrung 6 definiert. Des Weiteren ist ein zweiter Durchmesser 22 der Staukammer 18 und ein dritter Durchmesser 23 der Hauptkammer 19 eingezeichnet. Der Ventilstößel 5 weist an seiner der ersten Ventilsitzbohrung 6 zugewandten Seite einen vierten Durchmesser 24 auf.

Der vierte Durchmesser 24 entspricht in etwa dem zweiten Durchmesser 22. Dadurch ist bei einem minimalen Abheben der ersten Dichtfläche 9 von der ersten Ventilsitzbohrung 6 annähernd kein Fluidfluss von der Staukammer 18 in die Hauptkammer 19 möglich. Die minimale Differenz zwischen dem zweiten Durchmesser 22 und dem vierten Durchmesser 24 definiert die Strömungsquerschnittsfläche des Fluidflusses von der Staukammer 18 in die Hauptkammer 19. Diese Strömungsquerschnittsfläche ist äußerst klein oder gleich Null. Entscheidend ist, dass diese Strömungsquerschnittsfläche kleiner der durch den ersten Durchmesser 21 definierten Strömungsquerschnittsfläche ist.

Des Weiteren ist vorgesehen, dass der zweite Durchmesser 22 der Staukammer 18 wesentlich größer als der erste Durchmesser 21 ist, so dass hier eine ausreichend große Fläche zum Betätigen des Ventilstößels 5 zur Verfügung steht. Insbesondere ist der zweite Durchmesser 22 zumindest doppelt so groß wie der erste Durchmesser 21. So entsteht eine ausreichende Rückstellkraft die den Ventilstößel 5 auch gegen Massenträgheit und Reibung schnell und sicher in die zweite Stufe bewegt. Des Weiteren ist der dritte Durchmesser 23 zumindest um 20% größer als der zweite Durchmesser 22, so dass ein ausreichender Durchfluss zwischen der ersten Leitung P und der Tankleitung T möglich ist.

Figur 4 zeigt des Weiteren eine erste Länge 25 und eine zweite Länge 26. Die erste Länge 25 kennzeichnet die Länge des "minimalen Abhebens" der ersten Dichtfläche 9 von der ersten Ventilsitzbohrung 6. Während dieses "minimalen Abhebens" ist der Fluidfluss von der Staukammer 18 in die Hauptkammer 19 weitestgehend unterdrückt, so dass sich der Druck in der Staukammer 18 aufbaut. Die zweite Länge 26 definiert die größtmögliche Bewegung des Ventilstößels 5. Die erste Länge 25 ist kleiner der zweiten Länge 26.

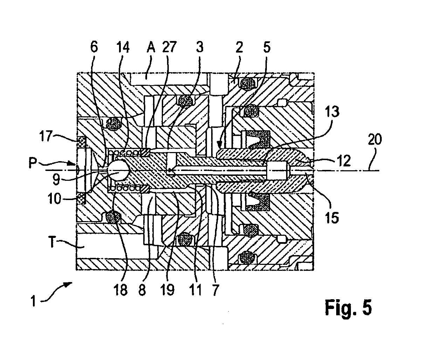

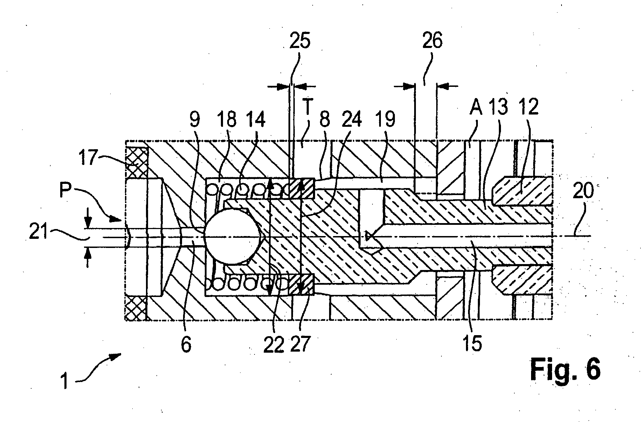

Die Figuren 5 und 6 zeigen ein zweites Ausführungsbeispiel des Hydraulikventils 1. Gleiche bzw. funktional gleiche Bauteile sind in allen Ausführungsbeispielen mit denselben Bezugszeichen versehen. Figur 5 zeigt einen Detailausschnitt des zweiten Ausführungsbeispiels, wie ihn Figur 3 bezüglich des ersten Ausführungsbeispiels zeigt. Figur 6 zeigt eine vergrößerte Aufnahme aus Figur 5.

Im zweiten Ausführungsbeispiel wird die Unterteilung der Ventilkammer 3 in die Staukammer 18 und die Hauptkammer 19 durch eine Scheibe 27 als Teil des Ventilstößels 5 bewirkt. Mittels dieser Scheibe 27 ist ein fluiddichtes Abdichten zur Innenwandung der Ventilkammer 3 hin möglich. Wie Figur 6 zeigt, kann die Ventilkammer 3 im zweiten Ausführungsbeispiel mit einheitlichem zweiten Durchmesser 22 ausgebildet werden. Das "minimale Abheben" ist wiederum definiert durch die erste Länge 25. Bei einer weitergehenden Bewegung des Ventilstößels in Richtung Schließung der zweiten Ventilsitzbohrung 7 überfährt die Scheibe 26 die dritte Leitung T, so dass ein annähernd freier Fluidfluss zwischen der ersten Leitung P und der dritten Leitung T möglich ist.

Zusammenfassend ist festzustellen, dass die Erfindung einen zusätzlichen Wirkraum (Staukammer 18) in der Ventilkammer 3 vorsieht, mit dem die hohe Flüssigkeitsenergie des vorgespannten Hydraulikmediums von der ersten Leitung P zur Rückstellung des Ventilstößels 5 und des Spulenankers genutzt werden kann.

Nach Abschalten des Elektromagneten öffnet sich durch die abfallende Zuhaltekraft des Ventilstößels 5 der Kugelventilsitz 6, 9, wodurch eine kleine Menge des vorgespannten Hydraulikmediums aus der ersten Leitung P, beispielsweise dem Sperrraum eines Türbetätigers, in die Staukammer 18 abströmen kann. Ein weiteres Abströmen in die dritte Leitung T bzw. den Tank, ist aber nicht unmittelbar möglich, sondern das Hydraulikfluid wird zunächst in der Staukammer 18 aufgestaut. In der Staukammer 18 wird das hohe Energiepotential des vorgespannten Fluides über eine im Vergleich zur Fläche der ersten Ventilsitzbohrung 6 deutlich größere Fläche, definiert durch den zweiten Durchmesser 22, auf die Stirnseite des Ventilstößels 5 für die sehr schnelle und sichere Rückstellung des Ventilstößels 5 und des Spulenankers ausgenutzt. Der Ventilstößel 5 wird hier gleichzeitig als Arbeitskolben zur Aufbringung der Stell- bzw. Schaltkräfte genutzt.

Der freie Abfluss des energiereichen Öls zum druckarmen Tankraum wird erst dann ermöglicht, wenn nach einem definierten Hub (definiert durch die zweite Länge 26) des Ventilstößels 5 der gegensätzliche Ventilsitz 7, 11 geschlossen wurde. Eine zuvor positive Überdeckung (definiert durch die erste Länge 25) des Ventilstößels 5 mit der Ventilkammer 3, ausgestattet mit einem sehr kleinen Ringspaltmaß, wird mit dem Erreichen des zweiten Ventilsitzes 7, 11 freigefahren.

Das Maß der positiven Überdeckung, also die erste Länge 25, bis zur Freigabe des Tankablaufs über die dritte Leitung T wird abhängig von der Bewegung des Ventilstößels 5 bis zum Anliegen der zweiten Dichtfläche 11 an der zweiten Ventilsitzbohrung 7 mit Steuerkanten 28 eingestellt. Nach Überfahren der Steuerkanten 28 ist der Fluidfluss von der ersten Leitung P zur dritten Leitung T annähernd frei und das restliche, eingespannte Hydrauliköl aus der ersten Leitung P kann frei in die dritte Leitung T abströmen.

Dieser Vorgang findet in Bruchteilen von Sekunden statt und vermeidet undefinierte Schaltzustände bzw. Zwischenpositionen des Wegeventils 1. Durch die hohen Rückstellkräfte, erzeugt in der Staukammer 18, werden auch schwergängige Ventilstößel 5, z.B. bei ungünstigen Toleranzen der Bauteile zueinander, sicher und ohne Verzögerung in die jeweilige andere Schaltstellung gebracht. Zudem können Dichtungsreibungen ausgeglichen werden. Die Massenträgheit des relativ schweren Magnetankers, wird durch das hohe Kraftpotential souverän überwunden.

Statt der Ausführung mit der positiven Überdeckung gemäß dem ersten Ausführungsbeispiel kann gemäß dem zweiten Ausführungsbeispiel die Scheibe 27 eingesetzt werden. Der Flüssigkeitsdruck in der Staukammer 18 trifft dabei auf eine Art Prallplatte (Scheibe 26), die erst nach erfolgtem Ventilstößelhub die Abflussbohrung zur dritten Leitung T freifährt. Im zweiten Ausführungsbeispiel kann aufgrund der Scheibe 26 von einem "dichten" System gesprochen werden. Im ersten Ausführungsbeispiel wird eine Leckage zwischen dem zweiten Durchmesser 22 und dem vierten Durchmesser 24 toleriert.

Das beschriebene Wegeventil 1 ist insbesondere bei einem Türschließermechanismus mit Speicherfeder anwendbar. Nach einmaligem Vorspannen von Hand über den Türflügel, durch eine interne Motor-Pumpeneinheit, oder durch ein elektromechanisch wirkendes Getriebe, wird die Speicherfeder über den Sperrraum hydraulisch gespannt gehalten. Nach der Abschaltung der Halteeinrichtung kann die gespeicherte Energie aus der Speicherfeder für eine sichere Schließung der Tür im Not- oder Bedarfsfall genutzt werden.

Der gezeigte Aufbau des beschriebenen Wegeventils 1 kann aber auch in vielen anderen Bereichen eingesetzt werden. Insbesondere überall dort, wo hydraulisch wirkende Wegeventile mit geringen Betätigungskräften trotzdem schnell und sicher geschaltet werden müssen, kann die Anwendung der gezeigten Erfindung vorteilhaft und sinnvoll sein.

### Bezugszeichenliste

- 1: Hydraulikwegeventil, insbesondere 3/2-Magnetwegeventil
- 2: Ventilgehäuse
- 3: Ventilkammer
- 4: Betätigungsmechanismus, insbesondere Elektromagnet
- 5: Ventilstößel
- 6: erste Ventilsitzbohrung
- 7: zweite Ventilsitzbohrung
- 8: freie Öffnung
- 9: erste Dichtfläche, insbesondere konvexe Oberfläche
- 10: Kugel
- 11: zweite Dichtfläche, insbesondere Kegelringfläche
- 12: erster Teil
- 13: zweiter Teil
- 14: Rückstellfeder
- 15: Verbindungskanal
- 16: Spule
- 17: Filter
- 18: Staukammer
- 19: Hauptkammer
- 20: Längsachse
- 21, 22, 23, 24: Durchmesser
- 25,26: Längen
- 27: Scheibe, insbesondere Dichtscheibe
- 28: Steuerkanten

## Patentansprüche

1. Hydraulisches Wegeventil (1), umfassend:
- ein Ventilgehäuse (2),
- eine in das Ventilgehäuse (2) integrierte Ventilkammer (3) mit zumindest einer ersten Ventilsitzbohrung (6) als Verbindung zu einer ersten Leitung (P), einer zweiten Ventilsitzbohrung (7) als Verbindung zu einer zweiten Leitung (A) und einer freien Öffnung (8) zu einer dritten Leitung (T),
- einen Betätigungsmechanismus (4), und
- einen durch den Betätigungsmechanismus (4) bewegbaren und teilweise in der Ventilkammer (3) angeordneten Ventilstößel (5),
- wobei der Ventilstößel (5) innerhalb der Ventilkammer (3) eine der ersten Ventilsitzbohrung (6) zugewandte Oberfläche, vorzugsweise konvexe Oberfläche, als erste Dichtfläche (9) und eine der zweiten Ventilsitzbohrung (7) zugewandte Fläche, vorzugsweise Kegelfläche, als zweite Dichtfläche (11) umfasst, sodass wahlweise die erste Ventilsitzbohrung (6) oder die zweite Ventilsitzbohrung (7) verschließbar ist, **dadurch gekennzeichnet, dass**
- durch Ausgestaltung einer Außenkontur des Ventilstößels (5) und einer Innenkontur der Ventilkammer (3) die Ventilkammer (3) in eine Staukammer (18) und in eine Hauptkammer (19) unterteilt ist,
- wobei die Staukammer (18) zwischen der ersten Ventilsitzbohrung (6) und dem Ventilstößel (5) ausgebildet ist, und
- wobei eine erste Strömungsquerschnittsfläche in der ersten Ventilsitzbohrung (6) größer ist als eine weitere Strömungsquerschnittsfläche der Strömung von der Staukammer (18) in die Hauptkammer (19) oder in die dritte Leitung (T) bei einem minimalen Abheben der ersten Dichtfläche (9) von der ersten Ventilsitzbohrung (6).

2. Hydraulisches Wegeventil nach einem der vorhergehenden Ansprüche, **dadurch gekennzeichnet, dass** die Staukammer (18) durch einen Absatz an der Außenkontur des Ventilstößels (5) und/oder einen Absatz an der Innenkontur der Ventilkammer (3) gebildet ist.

3. Hydraulisches Wegeventil nach einem der vorhergehenden Ansprüche, **dadurch gekennzeichnet, dass** die weitere Strömungsquerschnittsfläche eine Ringfläche ist.

4. Hydraulisches Wegeventil nach einem der vorhergehenden Ansprüche, **dadurch gekennzeichnet, dass** die weitere Strömungsquerschnittsfläche bei einem minimalen Abheben der ersten Dichtfläche (9) von der ersten Ventiisitzbohrung (6) kleiner ist als bei einer weitergehenden Wegbewegung der ersten Dichtfläche (9) von der ersten Ventilsitzbohrung (6).

5. Hydraulisches Wegeventil nach einem der vorhergehenden Ansprüche, **dadurch gekennzeichnet, dass** der Ventilstößel (5) eine Scheibe (27) umfasst, die zur Ausbildung der Staukammer (18) vollumfänglich, vorzugsweise fluiddicht, an der Innenkontur der Ventilkammer (3) anliegt.

6. Hydraulisches Wegeventil nach Anspruch 5 **dadurch gekennzeichnet, dass** die Scheibe (27) eine Dichtung umfasst, oder dass die Scheibe (27) als Dichtung ausgebildet ist.

7. Hydraulisches Wegeventil nach einem der vorhergehenden Ansprüche, **gekennzeichnet durch** eine Rückstellfeder (14) zum Bewegen des Ventilstößels (5) in Schließrichtung der zweiten Ventilsitzbohrung (7), wobei der Betätigungsmechanismus (4) lediglich zum Bewegen des Ventilstößels (5) in Schließrichtung der ersten Ventilsitzbohrung (6) ausgebildet ist.

8. Hydraulisches Wegeventil nach einem der vorhergehenden Ansprüche, **dadurch gekennzeichnet, dass** sich der Ventilstößel (5) aus der Ventilkammer (3) hinaus durch die zweite Ventilsitzbohrung (7) hindurch zum Betätigungsmechanismus (4) erstreckt.

9. Hydraulisches Wegeventil nach einem der vorhergehenden Ansprüche; **dadurch gekennzeichnet, dass** die erste Dichtfläche (9) durch eine Kugel (10) gebildet ist.

10. Hydraulisches Wegeventil nach einem der vorhergehenden Ansprüche, **dadurch gekennzeichnet, dass** die zweite Dichtfläche (11) als eine Kegelringfläche ausgebildet ist.

11. Hydraulisches Wegeventil nach einem der vorhergehenden Ansprüche, **dadurch gekennzeichnet, dass** eine Stirnfläche des Ventilstößels, auf die das Fluid nach dem minimalen Abheben der ersten Dichtfläche (9) von der ersten Ventilsitzbohrung (6) trifft, wesentlich größer ist als eine Querschnittsfläche der ersten Ventilsitzbohrung (6) am Austritt in die Staukammer.

12. Türbetätiger zum Bewegen eines Türflügels, umfassend
- ein Gehäuse,
- eine im Gehäuse angeordnete Antriebseinheit mit einer Abtriebswelle,
- eine auf die Antriebseinheit wirkende Speicherfeder zum Speichern einer Schließ- oder Öffnungsenergie für den Türflügel,
- einen im Gehäuse ausgebildeten hydraulischen Sperrraum zum Blockieren der kontrahierten Speicherfeder,
- einen im Gehäuse ausgebildeten hydraulischen Dämpfungsraum zum Dämpfen der Bewegung der Antriebseinheit, und
- ein hydraulisches Wegeventil (1) nach einem der vorhergehenden Ansprüche, wobei die erste Leitung (P) mit dem Sperrraum verbunden ist und die zweite Leitung (A) mit dem Dämpfungsraum verbunden ist.

## Claims

1. A hydraulic distribution valve (1), comprising:
- a valve housing (2),
- a valve chamber (3) integrated into the valve housing (2) and having at least one first valve seat bore (6) as a connection to a first line (P), a second valve seat bore (7) as a connection to a second line (A), and a free aperture (8) to a third line (T),
- an actuating mechanism (4), and
- a valve spindle (5) which is moveable by means of the actuating mechanism (4) and is partly disposed in the valve chamber (3),
- wherein the valve spindle (5) within the valve chamber (3) comprises a surface, preferably a convex surface as a first sealing surface (9), oriented towards the first valve seat bore (6), and a surface, preferably a cone-shaped surface as a second sealing surface (11), oriented towards the second valve seat bore (7), in such a way that optionally the first valve seat bore (6) or the second valve seat bore (7) can be closed, **characterized in that**
- by configuring an external contour of the valve spindle (5) and an internal contour of the valve chamber (3), the valve chamber (3) is subdivided into a retaining chamber (18) and a main chamber (19),
- wherein the retaining chamber (18) is formed between the first valve seat bore (6) and the valve spindle (5), and
- wherein the first flow cross-sectional surface in the first valve seat bore (6) is larger than another flow cross-sectional surface of the flow from the retaining chamber (18) into the main chamber (19) or into the third line (T) at a minimum lifting of the first sealing surface (9) off the first valve seat bore (6).

2. The hydraulic distribution valve according to any of the preceding claims, **characterized in that** the retaining chamber (18) is formed by means of a shoulder at the external contour of the valve spindle (5) and/or a shoulder at the internal contour of the valve chamber (3).

3. The hydraulic distribution valve according to any of the preceding claims, **characterized in that** the further flow cross-sectional surface is a ring surface.

4. The hydraulic distribution valve according to any of the preceding claims, **characterized in that**, at a minimum lifting of the first sealing surface (9) off the first valve seat bore (6), the further flow cross-sectional surface is smaller than at a further travel movement of the first sealing surface (9) off the first valve seat bore (6).

5. The hydraulic distribution valve according to any of the preceding claims, **characterized in that** the valve spindle (5) comprises a disc (27) which for forming the retaining chamber (18) on the entire circumference, preferably in a fluid-tight manner, bears against the internal contour of the valve chamber (3).

6. The hydraulic distribution valve according to claim 5, **characterized in that** the disc (27) comprises a sealing joint or **in that** the disc (27) is configured as a sealing joint.

7. The hydraulic distribution valve according to any of the preceding claims, **characterized by** a return spring (14) for moving the valve spindle (5) in the closing direction of the second valve seat bore (7), wherein the actuating mechanism (4) is configured just for moving the valve spindle (5) in the closing direction of the first valve seat bore (6).

8. The hydraulic distribution valve according to any of the preceding claims, **characterized in that** the valve spindle (5) extends from the valve chamber (3) through the second valve seat bore (7) towards the actuating mechanism (4).

9. The hydraulic distribution valve according to any of the preceding claims, **characterized in that** the first sealing surface (9) is configured by means of a sphere (10).

10. The hydraulic distribution valve according to any of the preceding claims, **characterized in that** the second sealing surface (11) is configured as a cone ring surface.

11. The hydraulic distribution valve according to any of the preceding claims, **characterized in that** a frontal face of the valve spindle, on which the fluid impacts after the minimum lifting of the first sealing surface (9) off the first valve seat bore (6), is considerably larger than a cross-sectional surface of the first valve seat bore (6) at the exit of the retaining chamber.

12. A door operator for moving a door leaf, comprising
- a housing,
- a drive unit with an output shaft disposed in the housing,
- an accumulating spring for storing closing energy or opening energy for the door leaf,
- a hydraulic blocking space, formed inside the housing, for blocking the contracting accumulating spring,
- a hydraulic dampening space, formed inside the housing, for dampening the movement of the drive unit, and
- a hydraulic distribution valve (1) according to any of the preceding claims, wherein the first line (P) is connected to the blocking space and the second line (A) is connected to the dampening space.

## Revendications

1. Soupape hydraulique directionnelle (1), comprenant :
- un boîtier de soupape (2),
- un compartiment de soupape (3), intégré dans le boîtier de soupape (2), avec au moins un premier alésage de siège de soupape (6) comme connexion à une première conduite (P), un deuxième alésage de siège de soupape (7) comme connexion à une deuxième conduite (A) et une ouverture libre (8) vers une troisième conduite (T),
- un mécanisme d'actionnement (4), et
- un poussoir de soupape (5) qui est déplaçable par le mécanisme d'actionnement (4) et est partiellement agencé dans le compartiment de soupape (3),
- dans le compartiment de soupape (3), le poussoir de soupape (5) comporte une surface orientée vers le premier alésage de siège de soupape (6), de préférence une surface convexe, comme première surface d'étanchéité (9), et une surface orientée vers le deuxième alésage de siège de soupape (7), de préférence une surface conique, comme deuxième surface d'étanchéité (11), de sorte que le premier alésage de siège de soupape (6) ou le deuxième alésage de siège de soupape (7) peut être obturé au choix, **caractérisée en ce que**
- par l'intermédiaire de l'aménagement d'un contour extérieur du poussoir de soupape (5) et d'un contour intérieur du compartiment de soupape (3), le compartiment de soupape (3) est subdivisé en un compartiment de retenue (18) et un compartiment principale (19),
- le compartiment de retenue (18) étant aménagé entre le premier alésage de siège de soupape (6) et le poussoir de soupape (5), et
- une première surface de section de passage dans le premier alésage de siège de soupape (6) est plus grande qu'une autre surface de section de passage du passage depuis le compartiment de retenue (18) vers le compartiment principal (19) ou vers la troisième ligne (T) lors d'un soulèvement minimal de la première surface d'étanchéité (9) du premier alésage de siège de soupape (6).

2. Soupape hydraulique directionnelle selon l'une des revendications précédentes, **caractérisée en ce que** le compartiment de retenue (18) est aménagé par l'intermédiaire d'un épaulement sur le contour extérieur du poussoir de soupape (5) et/ou d'un épaulement sur le contour intérieur du compartiment de soupape (3).

3. Soupape hydraulique directionnelle selon l'une des revendications précédentes, **caractérisée en ce que** l'autre surface de section de passage est une surface annulaire.

4. Soupape hydraulique directionnelle selon l'une des revendications précédentes, **caractérisée en ce que** l'autre surface de section de passage, lors d'un soulèvement minimal de la première surface d'étanchéité du premier alésage de siège de soupape (6), est plus petite que lors d'un mouvement de déplacement continu de la première surface d'étanchéité (9) du premier alésage de siège de soupape (6).

5. Soupape hydraulique directionnelle selon l'une des revendications précédentes, **caractérisée en ce que** le poussoir de soupape (5) comporte un disc (27) qui est plaqué sur toute la circonférence de préférence de manière étanche aux fluides contre le contour intérieur du compartiment de soupape (3) pour l'aménagement du compartiment de retenue (18).

6. Soupape hydraulique directionnelle selon la revendication 5, **caractérisée en ce que** le disc (27) comporte un joint d'étanchéité ou **en ce que** le disc (27) est aménagé comme un joint d'étanchéité.

7. Soupape hydraulique directionnelle selon l'une des revendications précédentes, **caractérisée par** un ressort de rappel (14) pour déplacer le poussoir de soupape (5) en la direction de fermeture du deuxième alésage de siège de soupape (7), le mécanisme d'actionnement (4) étant simplement aménagé pour déplacer le poussoir de soupape (5) en la direction de fermeture du premier alésage de siège de soupape (6).

8. Soupape hydraulique directionnelle selon l'une des revendications précédentes, **caractérisée en ce que** le poussoir de soupape (5) s'étend en dehors du compartiment de soupape (3) à travers le deuxième alésage de siège de soupape (7) et vers le mécanisme d'actionnement (4).

9. Soupape hydraulique directionnelle selon l'une des revendications précédentes, **caractérisée en ce que** la première surface d'étanchéité (9) est aménagée par l'intermédiaire d'une bille (10).

10. Soupape hydraulique directionnelle selon l'une des revendications précédentes, **caractérisée en ce que** la deuxième surface d'étanchéité (11) est aménagée comme surface annulaire conique.

11. Soupape hydraulique directionnelle selon l'une des revendications précédentes, **caractérisée en ce qu'**une face frontale du poussoir de soupape, sur laquelle le fluide est incidente après un soulèvement minimal de la première surface d'étanchéité (9) du premier alésage de siège de soupape (6), est considérablement plus grande qu'une section transversale du premier alésage de siège de soupape (6) à la sortie du compartiment de retenue.

12. Actionneur de porte pour déplacer un vantail de porte, comportant
- un boîtier,
- une unité d'entraînement avec un arbre de sortie agencée dans le boîtier,
- un ressort accumulateur agissant sur l'unité d'entraînement pour l'accumulation d'énergie de fermeture ou d'ouverture pour un vantail de porte,
- un espace de blocage hydraulique aménagé dans le boîtier pour le blocage du ressort d'accumulateur contracté,
- un espace d'amortissement hydraulique aménagé dans le boîtier pour l'amortissement du mouvement de l'unité d'entraînement, et
- une soupape hydraulique directionnelle (1) selon l'une des revendications précédentes, la première ligne (P) étant connectée à l'espace de blocage, et la deuxième ligne (A) étant connectée à l'espace d'amortissement.
